# EUROPEAN PATENT SPECIFICATION

(11) **EP 4 494 991 B1**
(45) Date of publication and mention of the grant of the patent: **03.12.2025**
(21) Application number: 24155983.0
(22) Date of filing: 06.02.2024
(51) Int. Cl.: B62M 6/55, B62M 11/02

(54) **POWER MODULE OF ELECTRIC ASSISTED BICYCLE**
LEISTUNGSMODUL FÜR FAHRRAD MIT ELEKTRISCHEM HILFSANTRIEB
MODULE DE PUISSANCE DE BICYCLETTE À ASSISTANCE ÉLECTRIQUE

(30) Priority: 17.07.2023 US 202363527246 P; 13.09.2023 CN 202311178903
(43) Date of publication of application: 22.01.2025
(73) Proprietor: Delta Electronics, Inc., Taoyuan City 333 (TW)
(72) Inventor: Chung, Chi-Wen, 333 Taoyuan City (TW); Tsao, Ming-Li, 333 Taoyuan City (TW); Huang, Chien-Ping, 333 Taoyuan City (TW); Chen, Chun-Lin, 333 Taoyuan City (TW)
(74) Representative: Uexküll & Stolberg

(56) References cited:
- DE-A1- 102021 129 782
- DE-A1- 102022 116 701
- US-A1- 2022 340 231
- US-B2- 8 646 560

## Description

### FIELD OF THE INVENTION

The present disclosure relates to a power module, and more particularly to a power module of a mid-drive electric assisted bicycle.

### BACKGROUND OF THE INVENTION

An electric assisted bicycle, also known as an e-bike, is a bicycle with an integrated electric motor and reducer used to assist propulsion through the motor power. Many kinds of e-bikes are available in the market, while they generally fall into two categories: one is an electric assisted bicycle that detects and assists the rider's pedal-power, and another is a conventional electric bicycle that provides the motor power merely. Since related structures and circuits for manpower and motor-assisted power have to be integrated in the electric assisted bicycle at the same time, size reduction has always been an important issue in designs of a power module. In addition, the power module accepts dual power inputs (i.e., the manpower and the motor-assisted power) at the same time, in order to assist the rider's performance under different usage scenarios. Therefore, the design of the power module for the electric assisted bicycle is quite difficult.

The power module of the conventional electric assisted bicycle mainly includes a motor and a reducer, which are arranged in a housing of the power module. In the prior art, the motor and the reducer are radially arranged and sleeved around a central pedal shaft, and a fixed gear of the reducer is connected to the housing. However, the fixed gear is not easy to install onto a fixed portion of the housing, and a radial thickness of the power module is increased due to the fixed gear.

In addition, due to spatial limitations, a torque sensor of the conventional power module is disposed between an inner surface of the housing of the power module and a pedal-shaft two-way bearing, and a pedal force is transmitted through the pedal-shaft bearing. Since the torque sensor is not serially connected within a transmission path of the pedal force, an inferred pedaling torque is calculated based on a downward force from the pedal rather than an actual pedaling torque. Therefore, a sensing error is relatively large, and the pedal force of only one of two pedals can be sensed due to a position configuration of the torque sensor. US 2022/340231 A1 discloses the following features of claim 1, a power module of an electric assisted bicycle, characterized by comprising: a housing with which a radial direction and an axial direction are defined, and comprising a middle frame and a partition portion, wherein the partition portion is extended along the radial direction toward an inner space of the housing, and divides an inner space of the housing into a motor accommodation portion and a reducer accommodation portion arranged along the axial direction; a pedal shaft accommodated in the housing, and extended along the axial direction; a motor accommodated in the motor accommodation portion, and comprising a stator; a reducer accommodated in the reducer accommodation portion, and comprising a reducer input shaft, a movable gear, a fixed gear and a reducer output shaft, wherein the fixed gear is sleeved around the movable gear, the fixed gear is fixed to a second side of the partition portion, and the first side and the second side are opposite to each other, wherein the reducer output shaft is connected to the movable gear along the axial direction, the reducer input shaft comprises an input-shaft main part, an input-shaft rotor part and an input-shaft eccentric part, the movable gear is sleeved around the input-shaft eccentric part, the input-shaft rotor part is connected to an output shaft of the motor along the radial direction, the input-shaft main part is connected to a third side of the partition portion, and the third side is connected between the first side and the second side; a gear-plate output shaft accommodated in the housing, wherein the reducer output shaft is sleeved around the gear-plate output shaft through a gear-plate-output-shaft first one-way bearing, and the gear-plate output shaft is sleeved around a first end of the pedal shaft through a gear-plate-output-shaft second one-way bearing; a pedal-shaft first two-way bearing accommodated in the housing, and sleeved around a second end of the pedal shaft; and a sensing component attached to the pedal shaft, and disposed adjacent to one side of the pedal-shaft first two-way bearing along the axial direction.

Therefore, there is a need of providing a power module with a motor and a reducer arranged axially for a mid-drive electric assisted bicycle to reduce the radial thickness and volume of the power module, improve an accuracy of pedaling torque measurement, and obviate the drawbacks encountered by the prior arts.

### SUMMARY OF THE INVENTION

An object of the present disclosure is to provide a power module with the motor and the reducer arranged axially for a mid-drive electric assisted bicycle to reduce the radial thickness and volume of the power module, and improve an accuracy of pedaling torque measurement.

Another object of the present disclosure is to provide a power module of a mid-drive electric assisted bicycle. A middle frame of a housing of the power module includes a partition portion extended along a radial direction toward an inner space of the housing, and the partition portion is configured to divide the inner space of the housing into a motor accommodation portion and a reducer accommodation portion arranged along an axial direction. When the motor and the reducer are sleeved around the pedal shaft along the axial direction, a stator of the motor and a fixed gear of the reducer are fixed and connected to two opposite sides of the partition portion, so as to realize alignment and installation, improve an assembly efficiency, enhance a heat dissipation efficiency of the stator and enhance a structural robustness. Furthermore, the power of the motor is transmitted to the reducer through a reducer input shaft between the motor and the reducer the axially arranged. One end of the reducer input shaft constitutes the input-shaft rotor part connected to the rotor (the outlet shaft) of the motor or the motor output shaft, and the other end constitutes the input-shaft eccentric part connected to the movable gear of the reducer. The input-shaft main part between the input-shaft rotor part and the input-shaft eccentric part is further radially connected to the third side of the partition portion through the bearings, so that the reducer input shaft is attached to the partition portion. On the other hand, the reducer input shaft can be further extended axially and attached to the end cap of the housing. Thereby, when the motor drives the reducer to operate, the rotation axis of the reducer input shaft can run stably. In other words, the stator of the motor abuts against one side of the partition portion along the axial direction to obtain more contact area between the stator and the housing and improve the heat dissipation efficiency. The fixed gear of the reducer is axially attached to the other opposite side of the partition portion to facilitate the positioning and installation, enhance the structure, and further reduce the radial space of the power module.

A further object of the present disclosure is to provide a power module of an electric assisted bicycle. By disposing the motor and the reducer arranged along the axial direction on two opposite sides of the partition portion, compared with the radial stacking design, the volume along the axial direction is slightly increased. The slightly additional size increased can be compensated by changing the design of a bicycle frame, so that the overall volume of the power module in the present disclosure is further reduced and is suitable for mounting on the bicycle frame. By connecting the three sides of the partition portion of the housing to the fixed gear of the reducer, the motor stator and the reducer-input-shaft main part, the space utilization of the entire power module can be optimized. Therefore, there is enough space for the torque sensor to be connected to the pedal shaft, so as to realize the accurate measurement of the pedaling torque of left and right sensing. Moreover, the structure is enhanced, the rotation axis of the reducer input shaft is stable, and the heat dissipation effect of the stator is improved at the same time.

In accordance with an aspect of the present disclosure, a power module of an electric assisted bicycle is provided. The power module of the electric assisted bicycle includes a housing, a pedal shaft, a motor, a reducer, a gear-plate output shaft, a pedal-shaft two-way bearing and a sensing component. The housing defines a radial direction and an axial direction, and includes a middle frame and a partition portion, wherein the partition portion is extended along the radial direction toward an inner space of the housing, and the partition portion divides the inner space of the housing into a motor accommodation portion and a reducer accommodation portion arranged along the axial direction. The pedal shaft is accommodated in the housing and extended along the axial direction. The motor is accommodated in the motor accommodation portion and includes a stator directly fixed to a first side of the partition portion. The reducer is accommodated in the reducer accommodation portion, and includes a reducer input shaft, a movable gear, a fixed gear and a reducer output shaft, wherein the fixed gear is sleeved around the movable gear along the radial direction, the fixed gear is fixed to a second side of the partition portion, and the first side and the second side are opposite to each other, wherein the reducer output shaft is connected to the movable gear along the axial direction, the reducer input shaft comprises an input-shaft main part, an input-shaft rotor part and an input-shaft eccentric part, the movable gear is sleeved around the input-shaft eccentric part, the input-shaft rotor part is connected to an output shaft of the motor along the radial direction, the input-shaft main part is connected to a third side of the partition portion, and the third side is connected between the first side and the second side. The gear-plate output shaft is accommodated in the housing. The reducer output shaft is sleeved around the gear-plate output shaft through a gear-plate-output-shaft first one-way bearing, and the gear-plate output shaft is sleeved around a first end of the pedal shaft through a gear-plate-output-shaft second one-way bearing. The pedal-shaft first two-way bearing is accommodated in the housing and sleeved around a second end of the pedal shaft. The sensing component is attached to the pedal shaft and disposed adjacent to one side of the pedal-shaft first two-way bearing.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a cross-sectional view illustrating a power module of an electric assisted bicycle according to a first embodiment of the present disclosure;
FIG. 2 is a cross-sectional view illustrating connection relationships between the reducer input shaft and the corresponding components for transmitting motor power to the reducer;
FIG. 3 is an exploded view illustrating the reducer input shaft and the corresponding components in FIG. 2;
FIG. 4 shows the transmission path of the torque of the power module according to the first embodiment of the present disclosure when the right pedaling torque is inputted;
FIG. 5 shows the transmission path of the torque of the power module according to the first embodiment of the present disclosure when the left pedaling torque is inputted;
FIG. 6 is a cross-sectional view illustrating a power module of an electric assisted bicycle according to a second embodiment of the present disclosure;
FIG. 7 is a cross-sectional view illustrating a power module of an electric assisted bicycle according to a third embodiment of the present disclosure; and
FIG. 8 is a cross-sectional view illustrating a power module of an electric assisted bicycle according to a fourth embodiment of the present disclosure.

### DETAILED DESCRIPTION OF THE PREFERRED EMBODIMENT

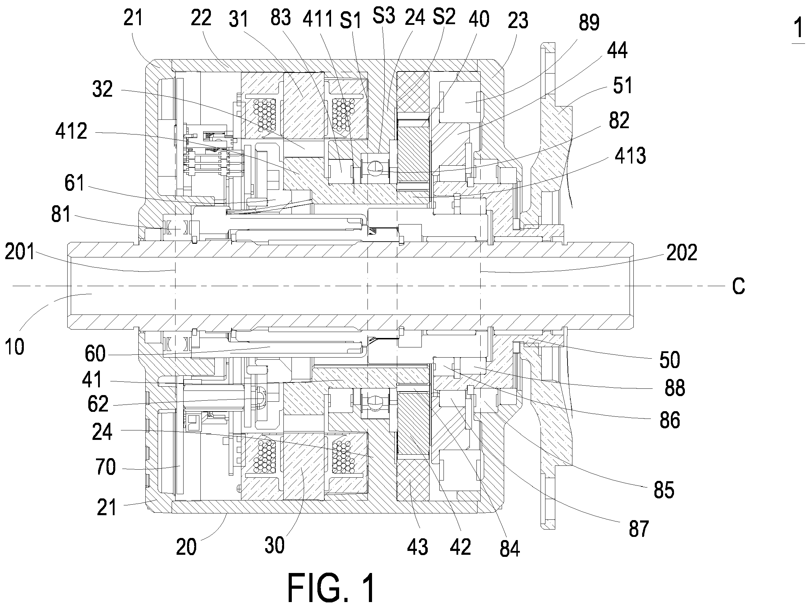

FIG. 1 to FIG. 5 illustrate a power module of an electric assisted bicycle according to a first embodiment of the present disclosure. In the first embodiment, a power module of an electric assisted bicycle (hereinafter referred to as the power module for short) 1 is applied in for example but not limited to a mid-drive architecture, and includes a pedal shaft 10, a housing 20, a motor 30, a reducer 40, a gear-plate output shaft 50, a pedal-shaft two-way bearing 81 and a sensing component 60. The aforementioned mid-drive architecture means that the power module 1 is installed between a front wheel and a rear wheel of the electric assisted bicycle. For example, the power module 1 is disposed on a bottom bracket, which is usually distinguished from a hub-type design installed on the wheel directly. For explanation, a radial direction and an axial direction C are defined to the housing 20, and the radial direction is perpendicular to the axial direction C. The housing 20 includes a left cap 21, a middle frame 22, a right cap 23 and a partition portion 24. The left cap 21, the middle frame 22 and the right cap 23 are connected to each other to define an inner space of the housing 20. In the first embodiment, the partition portion 24 is extended from the middle frame 22 along the radial direction toward the inner space of the housing 20. In this way, the partition portion 24 extended along the radial direction toward the inner space of the housing 20 divides the inner space of the housing 20 into a motor accommodation portion 201 (the left space shown in the figure) and a reducer accommodation portion 202 (the right space) arranged along the axial direction. The pedal shaft 10 penetrates the housing 20 and extended along the axial direction C, so as to pass through the left cap 21, the middle frame 22 and the right cap 23 along the axial direction C. Preferably but not exclusively, the motor 30 has an outer-stator-and-inner-rotor structure, and is accommodated in the motor accommodation portion 201. In the first embodiment, the motor 30 includes a stator 31 fixed to a first side S1 (the left side shown in the figure) of the partition portion 24. In addition, the reducer 40 is accommodated in the reducer accommodation portion 202, and includes a reducer input shaft 41, a movable gear 42, a fixed gear 43 and a reducer output shaft 44. The reducer input shaft 41 includes an input-shaft main part 411, an input-shaft rotor part 412 and an input-shaft eccentric part 413. The input-shaft rotor part 412 and the input-shaft eccentric part 413 are disposed at two opposite ends of the reducer input shaft 41, and the input-shaft main part 411 is arranged between the input-shaft rotor part 412 and the input-shaft eccentric part 413. Preferably but not exclusively, an outer diameter of the input-shaft rotor part 412 is greater than an outer diameter of the input-shaft main part 411, and the outer diameter of the input-haft main part 411 is greater than an outer diameter of the input-shaft eccentric part 413. In the first embodiment, the input-shaft rotor part 412 is radially connected with a rotor of the motor 30 or a motor output shaft (not shown). In some embodiments, the input-shaft rotor part 412 and the motor output shaft can be a same component to further reduce device volume, strengthen structure, and reduce cost. Preferably but not exclusively, a plurality of magnets 32 of the rotor are arranged around an outer ring surface of the input-shaft rotor part 412 to form the motor output shaft. In the first embodiment, the movable gear 42 is sleeved around the input-shaft eccentric part 413. The fixed gear 43 is sleeved around the movable gear 42, the fixed gear 43 is fixed to a second side S2 (the right side) of the partition portion 24. The reducer output shaft 44 is connected to the movable gear 42, and disposed adjacent to the movable gear 42 along the axial direction C. The input-shaft main part 411 is connected to a third side S3 (the inner side) of the partition portion 24. The first side S1 and the second side S2 are two opposite sides of the partition portion 24. The third side S3 is formed and connected between the first side S1 and the second side S2. The gear-plate output shaft 50 is accommodated in the housing 20. The reducer output shaft 44 is sleeved around the gear-plate output shaft 50 along the radial direction through a gear-plate-output-shaft first one-way bearing 87, and the gear-plate output shaft 50 is sleeved around a first end (the right end) of the pedal shaft 10 through a gear-plate-output-shaft second one-way bearing 88. The pedal-shaft first two-way bearing 81 is accommodated in the housing 20 and sleeved around a second end (the left end) of the pedal shaft 10. Preferably but not exclusively, the sensing component 60 is a torque sensor attached to a partial surface of the pedal shaft 10 and disposed adjacent to one side (the right side) of the pedal-shaft first two-way bearing 81 along the axial direction C.

Notably, in the first embodiment, the motor 30 and the reducer 40 of the present disclosure are disposed and arranged along the axial direction C, and accommodated in the housing 20. Moreover, the stator of the motor 30 and the fixed gear 43 of the reducer 40 are fixed to the first side S1 and the opposite second side S2 of the partition portion 24. In the first embodiment, the housing 20 of the power module 1 includes the partition portion 24 extended along the radial direction, so that the inner space of the housing 20 is divided into two accommodation spaces arranged along the axial direction C. One is the motor accommodation portion 201 located at the left side of the partition portion 24, and another one is the reducer accommodation portion 202 located at the right side of the partition portion 24. The stator 31 of the motor 30 is disposed adjacent to the first side S1 (the left side) of the partition portion 24, the fixed gear 43 (or called as the inner ring gear) of the reducer 40 is disposed adjacent to the second side S2 (the right side) of the partition portion 24, and the input-shaft main part 411 between the motor 30 and the reducer 40 is disposed adjacent to the third side S3 (the inner side) of the partition portion 24. The partition portion 24 is a partial extension of the middle frame 22 of the housing 20, on which the reducer and the motor components can rely to be fixed to the housing 20. Furthermore, one end (the left end) of the reducer input shaft 41 acts as the input-shaft rotor part 412, and the other end (the right end) of the reducer input shaft 41 acts as the input-shaft eccentric part 413. In the first embodiment, a terminal surface of the input-shaft rotor part 412 is connected to the rotor output shaft of the motor 30 and an encoder rotating part 61. An input-shaft-main-part first two-way bearing 82 and an input-shaft-main-part second two-way bearing 83 are disposed between the input-shaft main part 411 and the third side S3 of the partition portion 24. In detail, the inner sides of the input-shaft-main-part first two-way bearing 82 and the input-shaft-main-part second two-way bearing 83 are disposed adjacent to the input-shaft main part 411, and other outer sides of the input-shaft-main-part first two-way bearing 82 and the input-shaft-main-part second two-way bearing 83 are disposed adjacent to the third side S3 (the inner side) of the partition portion 24, so as to fix the input-shaft main body 411. As a result, the reducer 40 can rotate stably around an axis during operation. Moreover, the fixed gear 43 of the reducer 40 is disposed adjacent to the second side S2 of the partition portion 24 along the axial direction C, which results a smaller radial space of the power module 1 compared with that of the conventional implementation having a fixed gear radially connected to the housing. The stator 31 of the motor 30 is attached to the inner surface of the middle frame 22 and the first side S1 of the partition portion 24, to be held firmly and increase a contact area with the housing to improve a heat dissipation efficiency. By disposing the stator 31 of the motor 30, the fixed gear 43 of the reducer 40 and the reducer-input-shaft main part 411 of the reducer 40 adjacent to the three sides S1, S2, S3 of the partition portion 24 of the housing 20, the inner space of the housing 20 of the entire power module 1 can be fully used and optimized. Therefore, there is enough space for the sensing component 60 such as the torque sensor to be disposed on the surface of the pedal shaft 10. Moreover, the structural robustness of the power module 1 is enhanced, the rotation axis of the reducer input shaft 41 is stable, and the heat dissipation efficiency of the stator is improved at the same time.

In the first embodiment, the power module 1 further includes a chain sprocket 51 coaxially sleeved around the gear-plate output shaft 50, and the chain sprocket 51 is configured to transmit an assisted torque output of the gear-plate output shaft 50, or transmit a torque output provided by a forward rotation from human pedaling. Preferably but not exclusively, the torque output is transmitted to a rear wheel (not shown) through a chain of the electric assisted bicycle, so that the electric assisted bicycle goes forward. Notably, the torque output is provided through the gear-plate output shaft 50 or the chain sprocket 51. Preferably but not exclusively, in an embodiment, the torque output is provided by the human-pedaling power. In another embodiment, the torque output is provided by the motor 30 driving the reducer 40 to rotate the gear-plate output shaft 50. In other embodiments, the torque output is provided by both of the human-pedaling power and the motor assisted power. Certainly, the gear-plate output shaft 50 and the chain sprocket 51 of the present disclosure can be disposed close to a right foot side or left foot side of the rider, so as to drive the chain and the rear wheel to rotate and make the electric power-assisted bicycle move forward.

In the first embodiment, the power module 1 include an input-shaft-main-part first two-way bearing 82 and an input-shaft-main-part second two-way bearing 83 arranged along the axial direction C. In addition, the input-shaft-main-part first two-way bearing 82 and the input-shaft-main-part second two-way bearing 83 are sleeved around the input-shaft main part 411 and disposed adjacent to the third side S3 of the partition portion 24, respectively. The input-shaft-main-part second two-way bearing 83 is connected to one end (the right end) of the input-shaft rotor part 412 along the axial direction C. Moreover, in the first embodiment, the power module 1 includes an input-shaft-eccentric-part first two-way bearing 84, which is sleeved around the input-shaft eccentric part 413 and disposed adjacent to the movable gear 42. The power module 1 further includes a gear-plate-output-shaft first two-way bearing 85 and a gear-plate-output-shaft second two-way bearing 86. The gear-plate-output-shaft first two-way bearing 85 is sleeved around the gear-plate output shaft 50 and disposed adjacent to the right cap 23 of the housing 20 in the radial direction, and disposed adjacent to the gear-plate-output-shaft first one-way bearing 87 along the axial direction C. The gear-plate-output-shaft second two-way bearing 86 is sleeved around the gear-plate output shaft 50 and the pedal shaft 10, and disposed adjacent to the gear-plate-output-shaft second one-way bearing 88 along the axial direction C. In the first embodiment, the gear-plate-output-shaft first two-way bearing 85 and the gear-plate-output-shaft second two-way bearing 86 are configured for restricting the gear-plate output shaft 50 from moving along the axial direction C. In the first embodiment, the power module 1 further includes a reducer-output-shaft first two-way bearing 89, which is sleeved and connected between the reducer output shaft 44 and the inner surface of the housing 20. In the embodiment, the inner surface of the housing 20 is located at the right cap 23.

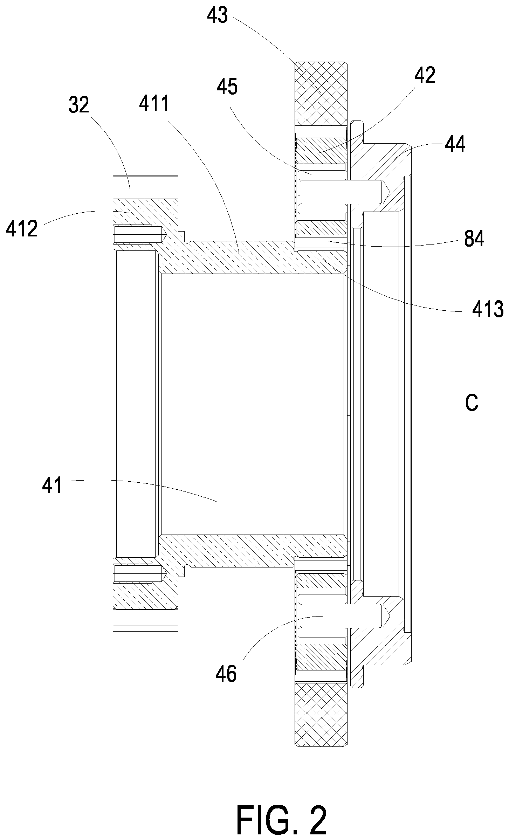

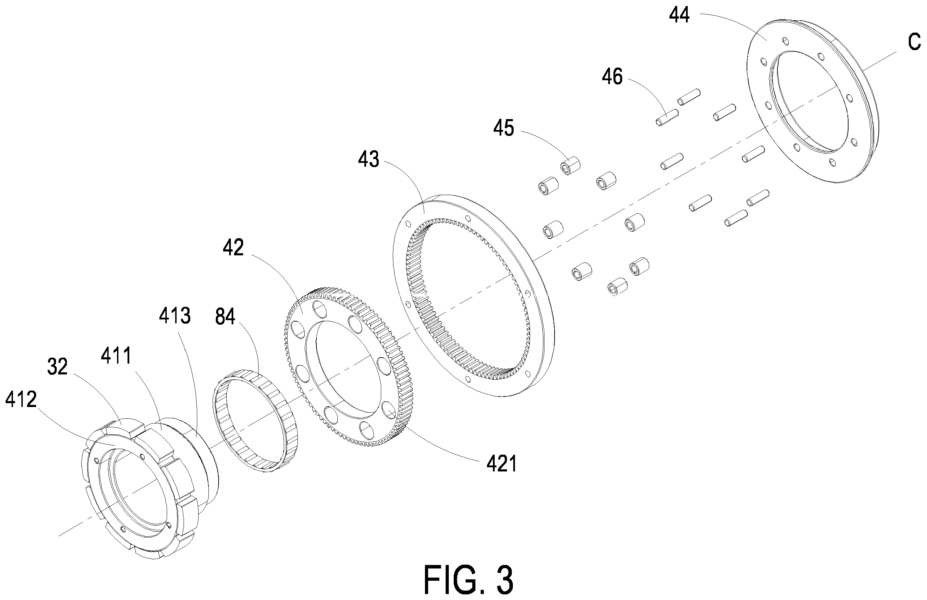

In the first embodiment, the stator 31 of the motor 30, the fixed gear 43 of the reducer 40 and the reducer-input-shaft main part 411 of the reducer 40 are disposed adjacent to the three sides S1, S2, S3 of the partition portion 24 of the housing 20, respectively, so that the inner space of the housing 20 of the entire power module 1 can be fully used and optimized. Therefore, there is enough space for the sensing component 60 to be accommodated in the housing 20 and connected to the surface of the pedal shaft 10. FIG. 2 is a cross-sectional view illustrating connection relationships between the reducer input shaft 41 and the corresponding components for transmitting motor power to the reducer 40. In FIG. 2, a power source of the reducer 40 is transmitted from the input-shaft rotor part 412 that is connected to the motor rotor or the motor output shaft, the input-shaft eccentric part 413, and then to the movable gear 42. When the movable gear 42 receives a rotational power, the movable gear 42 performs revolution and rotation motions due to gear meshing between the movable gear 42 and the fixed gear 43, and a driven force from the input-shaft eccentric part 413. FIG. 3 is an exploded view illustrating the reducer input shaft 41 and the corresponding components in FIG. 2. In FIG. 3, when the movable gear 42 performs the revolution and rotation motions, a movable-gear index aperture 421 of the movable gear 42 drives a reducer-output-shaft fixed pin 46 through a movable-gear two-way bearing 45, so that the input shaft 44 obtains a final rotational power and outputs it.

Referring to FIG. 1, in the first embodiment, the power module 1 further includes an encode component having a rotating part 61 and a sensing part 62. The rotating part 61 is connected to one end (the left end) of the input-shaft rotor part 412 along the axial direction C. The sensing part 62 is disposed adjacent to the rotating part 61, and configured to measure a speed and angle information of the reducer input shaft 41 during rotation. In the embodiment, the power module 1 further includes a driver 70 disposed in the housing 20 along the axial direction C, arranged between the motor 30 and the left cap 21 of the housing 20, and electrically connected to the encoder component and the sensing component 60.

Notably, when the motor and the reducer are radially disposed and arranged according to the prior art, although a width along the axial direction C is reduced, the radial thickness is relatively increased. In contrast, in the present disclosure, the motor 30 and the reducer 40 are arranged along the axial direction C, the volume along the axial direction C is slightly increased compared with the radial stacking design. However, a bicycle frame can be modified appropriately to compensate the slightly increased volume, so that the overall volume of the power module 1 is further reduced and is suitable for mounting on the bicycle frame, while an aesthetic appearance is provided.

On the other hand, in order to meet requirements of volume miniaturization and balance of bilateral (pedaling) sensing, the sensor component 60 such as the torque sensor is arranged in a middle of the pedal shaft 10. Preferably but not exclusively, the sensing component 60 is disposed at the right side of the pedal-shaft first two-way bearing 81 but not in contact with the pedal-shaft first two-way bearing 81, and is connected to the pedal shaft 10. Therefore, based on this design, the reducer 40 is moved (towards the right side indicated in the figure) along the axial direction C to give way to radial space for sensing component 60, so that an axial arrangement of the reductor 40 and the motor 30 is formed. Compared with the conventional radial stacking design of the motor and the reducer, the present disclosure is able to reduce a part of the radial space of the original design after the reducer 40 is moved along the axial direction C, and allow the sensing component 60 (the torque sensor) to be disposed in the middle of the pedal shaft 10. Since the sensing component 60 is connected to the surface of the pedal shaft 10 and is placed in the middle, it is connected in series in the torque flow (transmission) path, so that the requirement for bilateral (pedaling) sensing balance is realized.

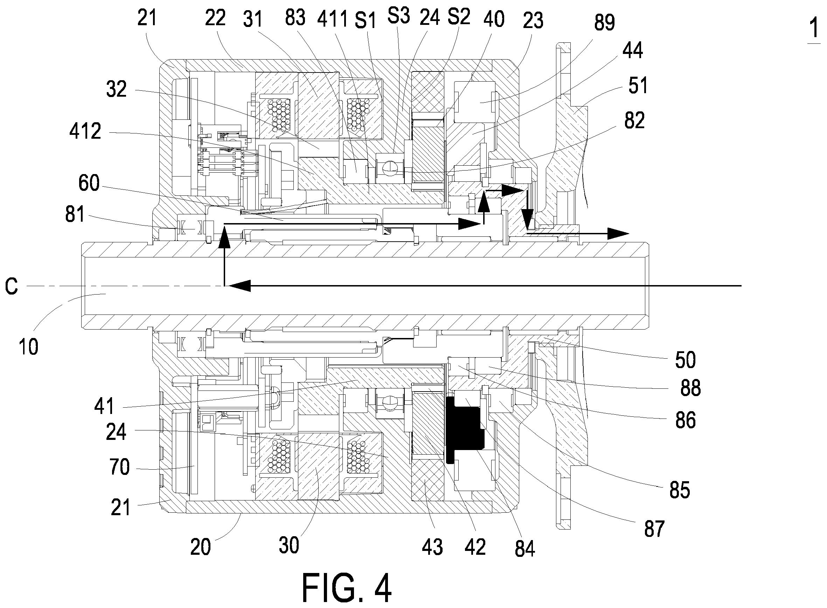

In the first embodiment, when a right pedaling torque is inputted to the pedal shaft 10 by the rider, as shown in FIG. 4, the torque flow is transmitted from the right side of the pedal shaft 10 to the left side, then returns to the right side through the sensing component 60 on the surface of the pedal shaft 10, and then is outputted through the gear-plate output shaft 50 and the chain sprocket 51. Since the sensing component 60 is connected in series in the transmission path of the torque flow, and located between the torque input point and the torque output point, the sensing component 60 directly encounters the transmitted torque, which improves the measurement accuracy.

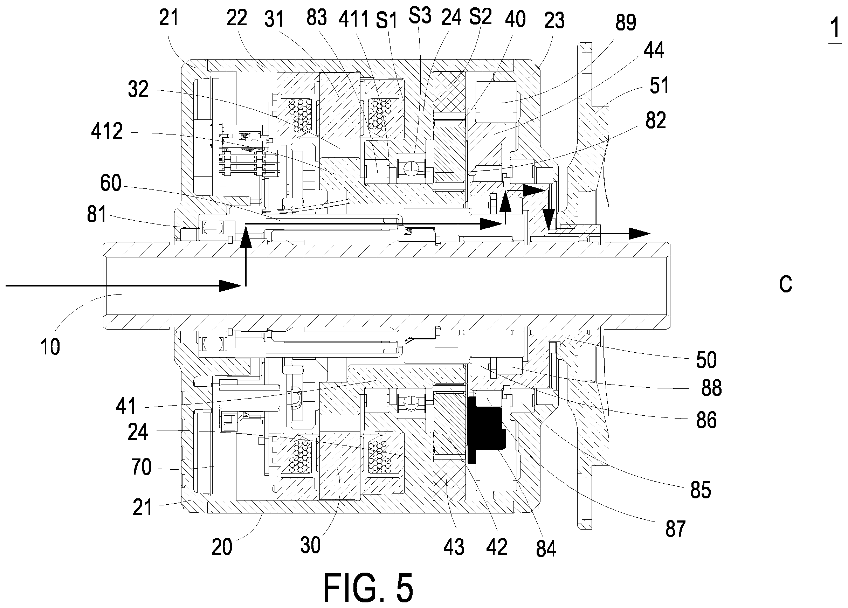

In the first embodiment, when a left pedaling torque is inputted to the pedal shaft 10 by the rider, as shown in FIG. 5, the torque flow is transmitted from the left side of the pedal shaft 10 to the right side, then flows through the sensing component 60 on the surface of the pedal shaft 10, and then is outputted through the gear-plate output shaft 50 and the chain sprocket 51. Since the sensing component 60 is connected in series in the transmission path of the torque flow, and located between the torque input point and the torque output point, the sensing component 60 is directly subjected to the transmitted torque, which improves the measurement accuracy.

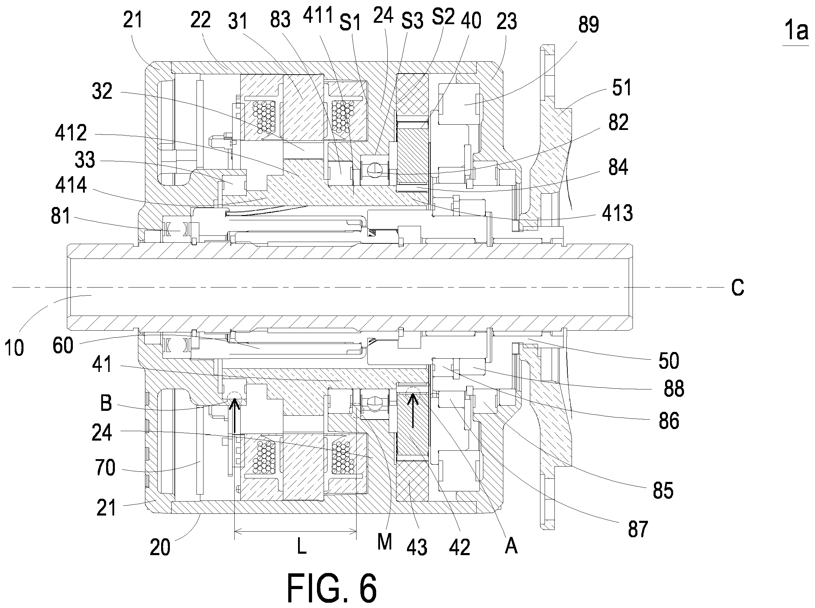

FIG. 6 illustrates a power module of an electric assisted bicycle according to a second embodiment of the present disclosure. In the second embodiment, the power module 1a is similar to the power module 1 of FIGS. 1 to 5, elements with same structures and functions are denoted with same symbols, and are not redundantly described herein. In the second embodiment, the reducer input shaft 41 further includes an extension portion 414. The extension portion 414 is connected to one side (the left side) of the input-shaft rotor part 412, extended to the left cap 21 of the housing 20 along the axial direction C, and connected to the left cap 21 of the housing 20 through an input-shaft rear bearing 33. In the second embodiment, by disposing the extension portion 414, a force span L from a bearing-forced point B of the input-shaft rear bearing 33 to a force fulcrum M is extended, and the force span L is greater than a distance from the reducer-forced point A to the force fulcrum M, so as to enhance a strength endurance of the reducer input shaft 41, improve a stability of the reducer input shaft 41 when the reducer 40 is forced, and to reduce vibration and noise of the entire power module 1a.

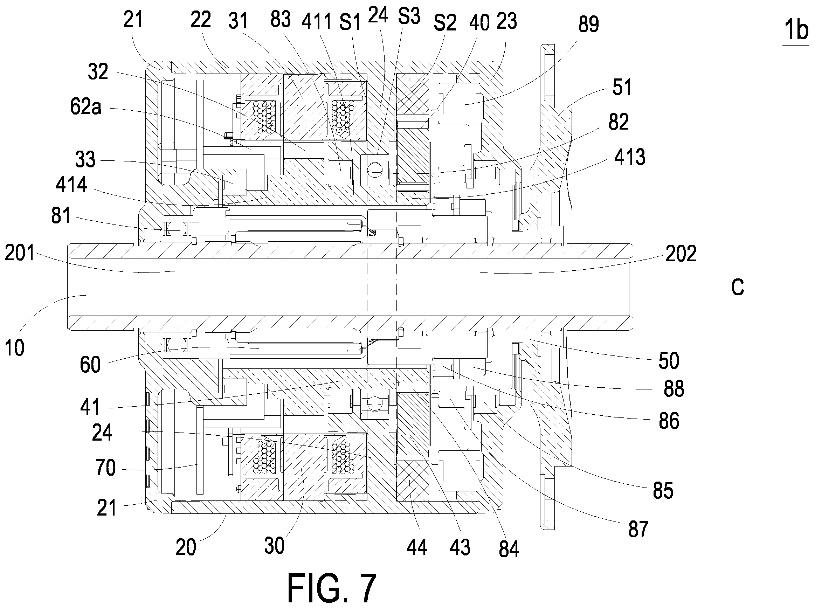

FIG. 7 illustrates a power module of an electric assisted bicycle according to a third embodiment of the present disclosure. In the third embodiment, the power module 1b is similar to the power modules 1, 1a of FIGS. 1 to 6, elements with same structures and functions are denoted with same symbols, and are not redundantly described herein. In the third embodiment, the reducer input shaft 41 also includes an extension portion 414, similar to that of FIG. 6. The extension portion 414 is extended to the left cap 21 along the axial direction C, and connected to the left cap 21 of the housing 20 through an input-shaft rear bearing 33, so as to extend the force span of the input-shaft rear bearing 33. In the third embodiment, the power module 1b further includes an encoder component. Preferably but not exclusively, the encoder component is a magnetic-inductive has a sensing part 62a disposed adjacent to a motor-rotor magnet 32 of the motor 30 for sensing a magnetic field on one side of the motor-rotor magnet 32 and measuring a speed and angle information of the motor 30 during rotation.

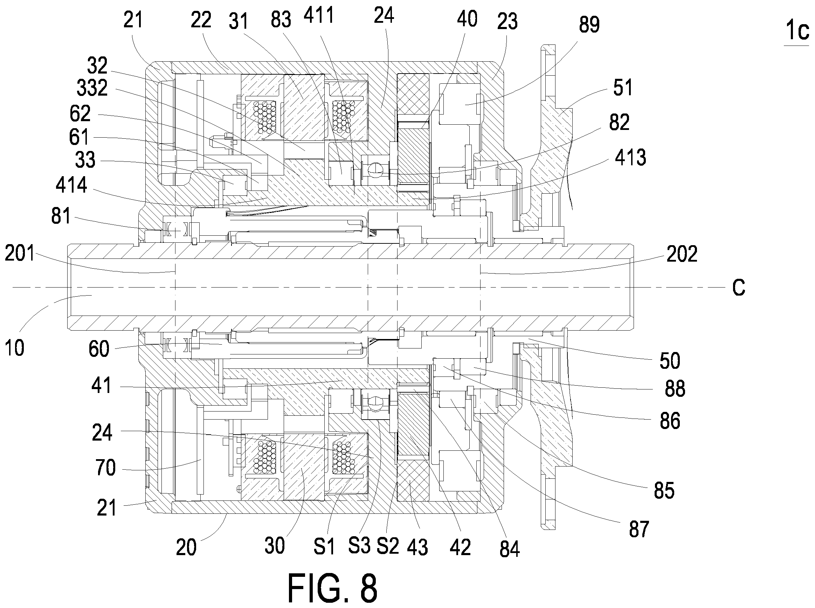

FIG. 8 illustrates a power module of an electric assisted bicycle according to a fourth embodiment of the present disclosure. In the fourth embodiment, the power module 1c is similar to the power modules 1, 1a of FIGS. 1 to 6, elements with same structures and functions are denoted with same symbols, and are not redundantly described herein. In the fourth embodiment, the reducer input shaft 41 also includes an extension portion 414, similar to that of FIG. 6. The extension portion 414 is extended to the left cap 21 along the axial direction C, and connected to the left cap 21 of the housing 20 through an input-shaft rear bearing 33, so as to extend the force span of the input-shaft rear bearing 33. In the fourth embodiment, the power module 1c further includes an encoder component. Preferably but not exclusively, the encoder component is a rotation-sensing encoder, which has a rotating part 61 and a sensing part 62. The rotating part 61 is disposed on the reducer input shaft 41, sleeved around and connected to the extension portion 414. The rotating part 61 and the sensing part 62 are arranged coaxially. In addition, the rotating part 61 is disposed adjacent to the sensing part 62, so as to realize the measurement of a speed and angle information of the reducer 40 during rotation.

In summary, the present disclosure provides a mid-drive power module with the motor and the reducer arranged axially for an electric assisted bicycle to reduce the radial thickness and volume of the power module, and improve the accuracy of pedaling torque measurement . The middle frame of the housing includes a partition portion extended along the radial direction toward the inner space and divides an inner space of the housing into a motor accommodation portion and a reducer accommodation portion arranged along the axial direction. When the motor and the reducer are sleeved around the pedal shaft along the axial direction, the stator of the motor and the fixed gear of the reducer are fixed and connected to the two opposite sides of the partition portion, so as to realize the alignment and installation, improve the assembly efficiency, enhance the heat dissipation efficiency of the stator and enhance the structure. Furthermore, the power of the motor is transmitted to the reducer through a reducer input shaft between the motor and the reducer that are axially arranged. One end of the reducer input shaft constitutes the input-shaft rotor part connected to the rotor (the outlet shaft) of the motor or the motor output shaft, and the other end constitutes the input-shaft eccentric part connected to the movable gear of the reducer. The input-shaft main part between the input-shaft rotor part and the input-shaft eccentric part is further radially connected to the third side of the partition portion through the bearings, so that the reducer input shaft is attached to the partition portion. On the other hand, the reducer input shaft can be further extended along the axial direction and attached to the end cap of the housing. Thereby, when the motor drives the reducer to operate, the rotation axis of the reducer input shaft can run stably. In other words, the stator of the motor abuts against one side of the partition portion along the axial direction to obtain more contact area between the stator and the housing and improve the heat dissipation efficiency. The fixed gear of the reducer is axially attached to the other opposite side of the partition portion to facilitate the positioning and installation, enhance the structure, and further reduce the radial space of the power module. By disposing the motor and the reducer arranged along the axial direction on two opposite sides of the partition portion, compared with the radial stacking design, the volume along the axial direction is slightly increased. The slightly additional size increased can be compensated by changing the design of the bicycle frame, so that the overall volume of the power module in the present disclosure is further reduced and is suitable for mounting on the bicycle frame. By connecting the three sides of the partition portion of the housing to the fixed gear of the reducer, the motor stator and the reducer-input-shaft main part, the space utilization of the entire power module can be optimized. Therefore, there is enough space for the torque sensor to be connected to the pedal shaft, so as to realize the accurate measurement of the pedaling torque of left and right sensing. Moreover, the structure is enhanced, the rotation axis of the reducer input shaft is stable, and the heat dissipation effect of the stator is improved at the same time.

## Claims

1. A power module (1, 1a, 1b, 1c) of an electric assisted bicycle, **characterized by** comprising:
a housing (20) with which a radial direction and an axial direction (C) are defined, and comprising a middle frame (22) and a partition portion (24), wherein the partition portion (24) is extended along the radial direction toward an inner space of the housing (20), and divides an inner space of the housing (20) into a motor accommodation portion (201) and a reducer accommodation portion (202) arranged along the axial direction (C);
a pedal shaft (10) accommodated in the housing (20), and extended along the axial direction (C);
a motor (30) accommodated in the motor accommodation portion (201), and comprising a stator (31) directly fixed to a first side (S1) of the partition portion (24);
a reducer (40) accommodated in the reducer accommodation portion (202), and comprising a reducer input shaft (41), a movable gear (42), a fixed gear (43) and a reducer output shaft (44), wherein the fixed gear (43) is sleeved around the movable gear (42), the fixed gear (43) is fixed to a second side (S2) of the partition portion (24), and the first side (S1) and the second side (S2) are opposite to each other, wherein the reducer output shaft (41) is connected to the movable gear (42) along the axial direction (C), the reducer input shaft (41) comprises an input-shaft main part (411), an input-shaft rotor part (412) and an input-shaft eccentric part (413), the movable gear (42) is sleeved around the input-shaft eccentric part (413), the input-shaft rotor part (412) is connected to an output shaft of the motor (30) along the radial direction, the input-shaft main part (411) is connected to a third side (S3) of the partition portion (24), and the third side (S3) is connected between the first side (S1) and the second side (S2);
a gear-plate output shaft (50) accommodated in the housing (20), wherein the reducer output shaft (44) is sleeved around the gear-plate output shaft (50) through a gear-plate-output-shaft first one-way bearing (87), and the gear-plate output shaft (50) is sleeved around a first end of the pedal shaft (10) through a gear-plate-output-shaft second one-way bearing (88);
a pedal-shaft first two-way bearing (81) accommodated in the housing (20), and sleeved around a second end of the pedal shaft (10); and
a sensing component (60) attached to the pedal shaft (10), and disposed adjacent to one side of the pedal-shaft first two-way bearing (81) along the axial direction (C).

2. The power module (1) of the electric assisted bicycle according to claim 1, further comprising an encoder component (60) having a rotating part (61) connected to the input-shaft rotor part (412) along the axial direction (C).

3. The power module (1, 1a, 1b, 1c) of the electric assisted bicycle according to claim 1, wherein, when the input-shaft main part (411) is arranged between the input-shaft rotor part (412) and the input-shaft eccentric part (413), an outer diameter of the input-shaft rotor part (412) is greater than an outer diameter of the input-shaft main part (411), and the outer diameter of the input-haft main part (411) is greater than an outer diameter of the input-shaft eccentric part (413).

4. The power module (1, 1a, 1b, 1c) of the electric assisted bicycle according to claim 1, further comprising an input-shaft-main-part first two-way bearing (82) and an input-shaft-main-part second two-way bearing (83) arranged along the axial direction (C), and sleeved around the input-shaft main part (411) and disposed adjacent to the third side (S3) of the partition portion (24), respectively, wherein the input-shaft-main-part second two-way bearing (83) is connected to the input-shaft rotor part (412) along the axial direction (C).

5. The power module of the electric assisted bicycle according to claim 1, further includes a reducer-output-shaft first two-way bearing (89) and an input-shaft-eccentric-part first two-way bearing (82), wherein the reducer-output-shaft first two-way bearing (89) is sleeved around the reducer output shaft (44) and disposed adjacent to the housing (20), and the input-shaft-eccentric-part first two-way bearing (82) is sleeved around the input-shaft eccentric part (413) and disposed adjacent to the movable gear (42).

6. The power module (1, 1a, 1b, 1c) of the electric assisted bicycle according to claim 1, further comprising a gear-plate-output-shaft first two-way bearing (85) and a gear-plate-output-shaft second two-way bearing (86) configured for restricting the gear-plate output shaft (50) from moving along the axial direction (C), wherein the gear-plate-output-shaft first two-way bearing (85) is sleeved around the gear-plate output shaft (50) and disposed adjacent to the housing (20) in the radial direction, and disposed adjacent to the gear-plate-output-shaft first one-way bearing (87) along the axial direction (C), wherein the gear-plate-output-shaft second two-way bearing (86) is sleeved around the gear-plate output shaft (50) and disposed adjacent to the pedal shaft (10), and disposed adjacent to the gear-plate-output-shaft second one-way bearing (88) along the axial direction (C).

7. The power module (1, 1a, 1b, 1c) of the electric assisted bicycle according to claim 1, further comprising a driver (70) disposed in the housing (20), arranged between the motor (30) and a cap (21) of the housing (20), and electrically connected to an encoder component and the sensing component (60).

8. The power module (1, 1a, 1b, 1c) of the electric assisted bicycle according to claim 1, wherein the reducer input shaft (41) further comprises an extension portion (414) extended to a cap (21) of the housing (20) along the axial direction (C), and connected to the cap (21) through an input-shaft rear bearing (33).

9. The power module (1c) of the electric assisted bicycle according to claim 8, further comprising an encode component having a rotating part (61) and a sensing part (62) arranged in the radial direction, wherein the rotating part (61) is disposed on the extension portion (414) of the reducer input shaft (41).

10. The power module (1b) of the electric assisted bicycle according to claim 1, further comprising an encoder component having a sensing part (62a) disposed adjacent to a motor-rotor magnet (32) of the motor (30).

## Patentansprüche

1. Antriebsmodul (1, 1a, 1b, 1c) eines elektrisch unterstützten Fahrrads, **gekennzeichnet durch**:
ein Gehäuse (20), durch das eine radiale Richtung sowie eine axiale Richtung (C) definiert sind und das einen mittleren Rahmen (22) sowie einen Trennbereich (24) aufweist, wobei sich der Trennbereich (24) entlang der radialen Richtung in Richtung eines Innenraums des Gehäuses (20) erstreckt und einen Innenraum des Gehäuses (20) in einen Motor-Aufnahmebereich (201) sowie einen Getriebe-Aufnahmebereich (202) unterteilt, die entlang der axialen Richtung (C) angeordnet sind;
eine Pedalwelle (10), die in dem Gehäuse (20) aufgenommen ist und sich entlang der axialen Richtung (C) erstreckt;
einen Motor (30), der in dem Motor-Aufnahmebereich (201) aufgenommen ist und einen Stator (31) umfasst, der direkt an einer ersten Seite (S1) des Trennbereichs (24) befestigt ist;
ein Getriebe (40), das in dem Getriebe-Aufnahmebereich (202) aufgenommen ist und eine Getriebe-Eingangswelle (41), ein bewegliches Zahnrad (42), ein feststehendes Zahnrad (43) und eine Getriebe-Ausgangswelle (44) aufweist, wobei das feststehende Zahnrad (43) um das bewegliche Zahnrad (42) herum angeordnet ist, das feststehende Zahnrad (43) an einer zweiten Seite (S2) des Trennbereichs (24) befestigt ist, und die erste Seite (S1) und die zweite Seite (S2) einander gegenüberliegen, wobei die Getriebe-Ausgangswelle (41) entlang der axialen Richtung (C) mit dem beweglichen Zahnrad (42) verbunden ist, die Getriebe-Eingangswelle (41) einen Eingangswellen-Hauptteil (411), einen Eingangswellen-Rotorteil (412) und einen Eingangswellen-Exzenterteil (413) umfasst, das bewegliche Zahnrad (42) um den Eingangswellen-Exzenterteil (413) herum angeordnet ist, der Eingangswellen-Rotorteil (412) entlang der radialen Richtung mit einer Ausgangswelle des Motors (30) verbunden ist, der Eingangswellen-Hauptteil (411) mit einer dritten Seite (S3) des Trennbereichs (24) verbunden ist, und die dritte Seite (S3) zwischen der ersten Seite (S1) und der zweiten Seite (S2) verbunden ist;
eine Zahnradplatten-Ausgangswelle (50), die in dem Gehäuse (20) aufgenommen ist, wobei die Getriebe-Ausgangswelle (44) über ein erstes Einweg-Lager (87) für die Zahnradplatten-Ausgangswelle um die Zahnradplatten-Ausgangswelle (50) herum angeordnet ist, und die Zahnradplatten-Ausgangswelle (50) über ein zweites Einweg-Lager (88) für die Zahnradplatten-Ausgangswelle um ein erstes Ende der Pedalwelle (10) herum angeordnet ist;
ein erstes Zweiweg-Lager (81) der Pedalwelle, das in dem Gehäuse (20) aufgenommen und um ein zweites Ende der Pedalwelle (10) herum angeordnet ist; und
eine Sensorkomponente (60), die an der Pedalwelle (10) angebracht und entlang der axialen Richtung (C) benachbart zu einer Seite des ersten Zweiweg-Lagers (81) der Pedalwelle angeordnet ist.

2. Antriebsmodul (1) des elektrisch unterstützten Fahrrads nach Anspruch 1, ferner umfassend eine Encoder-Komponente (60) mit einem rotierenden Teil (61), das entlang der axialen Richtung (C) mit dem Eingangswellen-Rotorteil (412) verbunden ist.

3. Antriebsmodul (1, 1a, 1b, 1c) des elektrisch unterstützten Fahrrads nach Anspruch 1, wobei, wenn der Eingangswellen-Hauptteil (411) zwischen dem Eingangswellen-Rotorteil (412) und dem Eingangswellen-Exzenterteil (413) angeordnet ist, ein Außendurchmesser des Eingangswellen-Rotorteils (412) größer ist als ein Außendurchmesser des Eingangswellen-Hauptteils (411), und der Außendurchmesser des Eingangswellen-Hauptteils (411) größer ist als ein Außendurchmesser des Eingangswellen-Exzenterteils (413).

4. Antriebsmodul (1, 1a, 1b, 1c) des elektrisch unterstützten Fahrrads nach Anspruch 1, ferner umfassend ein erstes Zweiweg-Lager (82) für den Eingangswellen-Hauptteil und ein zweites Zweiweg-Lager (83) für den Eingangswelle-Hauptteil, die entlang der axialen Richtung (C) angeordnet sind und jeweils um den Eingangswellen-Hauptteil (411) herum angeordnet und benachbart zur dritten Seite (S3) des Trennbereichs (24) angeordnet sind, wobei das zweite Zweiweg-Lager (83) des Eingangswellen-Hauptteils entlang der axialen Richtung (C) mit dem Eingangswellen-Rotorteil (412) verbunden ist.

5. Antriebsmodul des elektrisch unterstützten Fahrrads nach Anspruch 1, ferner umfassend ein erstes Zweiweg-Lager (89) für die Getriebe-Ausgangswelle und ein erstes Zweiweg-Lager (82) für den Eingangswellen-Exzenterteil, wobei das erste Zweiweg-Lager (89) für die Getriebe-Ausgangswelle um die Getriebe-Ausgangswelle (44) herum angeordnet und benachbart zu dem Gehäuse (20) angeordnet ist, und das erste Zweiweg-Lager (82) für den Eingangswellen-Exzenterteil um den Eingangswellen-Exzenterteil (413) herum angeordnet und benachbart zu dem beweglichen Zahnrad (42) angeordnet ist.

6. Antriebsmodul (1, 1a, 1b, 1c) des elektrisch unterstützten Fahrrads nach Anspruch 1, ferner umfassend ein erstes Zweiweg-Lager (85) für die Zahnradplatten-Ausgangswelle und ein zweites Zweiweg-Lager (86) für die Zahnradplatten-Ausgangswelle, die ausgestaltet sind, um eine Bewegung der Zahnradplatten-Ausgangswelle (50) entlang der axialen Richtung (C) zu begrenzen, wobei das erste Zweiweg-Lager (85) für die Zahnradplatten-Ausgangswelle um die Zahnradplatten-Ausgangswelle (50) herum angeordnet ist und in radialer Richtung benachbart zum Gehäuse (20) angeordnet ist und entlang der axialen Richtung (C) benachbart zum ersten Einweg-Lager (87) für die Zahnradplatten-Ausgangswelle angeordnet ist, wobei das zweite Zweiweg-Lager (86) für die Zahnradplatten-Ausgangswelle um die Zahnradplatten-Ausgangswelle (50) herum angeordnet ist und benachbart zur Pedalwelle (10) angeordnet ist und entlang der axialen Richtung (C) benachbart zum zweiten Einweg-Lager (88) für die Zahnradplatten-Ausgangswelle angeordnet ist.

7. Antriebsmodul (1, 1a, 1b, 1c) des elektrisch unterstützten Fahrrads nach Anspruch 1, ferner umfassend einen Treiber (70), der in dem Gehäuse (20) angeordnet ist, zwischen dem Motor (30) und einer Kappe (21) des Gehäuses (20) angeordnet ist sowie elektrisch mit einer Encoder-Komponente und der Sensor-Komponente (60) verbunden ist.

8. Antriebsmodul (1, 1a, 1b, 1c) des elektrisch unterstützten Fahrrads nach Anspruch 1, wobei die Getriebe-Eingangswelle (41) ferner einen Verlängerungsbereich (414) aufweist, der sich entlang der axialen Richtung (C) zu einer Kappe (21) des Gehäuses (20) erstreckt und über ein hinteres Eingangswellen-Lager (33) mit der Kappe (21) verbunden ist.

9. Antriebsmodul (1c) des elektrisch unterstützten Fahrrads nach Anspruch 8, ferner umfassend eine Encoder-Komponente mit einem rotierenden Teil (61) und einem Sensorteil (62), die in der radialen Richtung angeordnet sind, wobei der rotierende Teil (61) an dem Verlängerungsbereich (414) der Getriebe-Eingangswelle (41) angeordnet ist.

10. Antriebsmodul (1b) des elektrisch unterstützten Fahrrads nach Anspruch 1, ferner umfassend eine Encoder-Komponente mit einem Sensorteil (62a), die benachbart zu einem Motorrotor-Magnet (32) des Motors (30) angeordnet ist.

## Revendications

1. Module de puissance (1, 1a, 1b, 1c) d'un vélo à assistance électrique, **caractérisé en ce qu'**il comprend:
un boîtier (20) avec lequel une direction radiale et une direction axiale (C) sont définies, et comprenant un cadre central (22) et une partie cloison (24), dans lequel la partie cloison (24) s'étend le long de la direction radiale en direction d'un espace interne du boîtier (20), et divise un espace interne du boîtier (20) en une partie de réception (201) de moteur et une partie de réception (202) de réducteur agencées le long de la direction axiale (C);
un arbre de pédale (10) reçu dans le boîtier (20), et s'étendant le long de la direction axiale (C);
un moteur (30) reçu dans la partie de réception (201) de moteur, et comprenant un stator (31) directement fixé à un premier côté (S1) de la partie cloison (24);
un réducteur (40) reçu dans la partie de réception (202) de réducteur, et comprenant un arbre d'entrée (41) de réducteur, un engrenage mobile (42), un engrenage fixe (43) et un arbre de sortie (44) de réducteur, dans lequel l'engrenage fixe (43) est emmanché autour de l'engrenage mobile (42), l'engrenage fixe (43) est fixé à un deuxième côté (S2) de la partie cloison (24), et le premier côté (S1) et le deuxième côté (S2) sont opposés l'un à l'autre, dans lequel l'arbre de sortie (41) de réducteur est relié à l'engrenage mobile (42) le long de la direction axiale (C), l'arbre d'entrée (41) de réducteur comprend une partie principale (411) d'arbre d'entrée, une partie rotor (412) d'arbre d'entrée et une partie excentrique (413) d'arbre d'entrée, l'engrenage mobile (42) est emmanché autour de la partie excentrique (413) d'arbre d'entrée, la partie rotor (412) d'arbre d'entrée est reliée à un arbre de sortie du moteur (30) le long de la direction radiale, la partie principale (411) d'arbre d'entrée est reliée à un troisième côté (S3) de la partie cloison (24), et le troisième côté (S3) est relié entre le premier côté (S1) et le deuxième côté (S2);
un arbre de sortie (50) de plaque d'engrenage reçu dans le boîtier (20), dans lequel l'arbre de sortie (44) de réducteur est emmanché autour de l'arbre de sortie (50) de plaque d'engrenage à travers un premier roulement unidirectionnel (87) d'arbre de sortie de plaque d'engrenage, et l'arbre de sortie (50) de plaque d'engrenage est emmanché autour d'une première extrémité de l'arbre de pédale (10) à travers un second roulement unidirectionnel (88) d'arbre de sortie de plaque d'engrenage;
un premier roulement bidirectionnel (81) d'arbre de pédale reçu dans le boîtier (20), et emmanché autour d'une seconde extrémité de l'arbre de pédale (10); et
un composant de détection (60) fixé à l'arbre de pédale (10), et disposé adjacent à un côté du premier roulement bidirectionnel (81) d'arbre de pédale le long de la direction axiale (C).

2. Module de puissance (1) du vélo à assistance électrique selon la revendication 1, comprenant en outre un composant codeur (60) ayant une partie rotative (61) reliée à la partie rotor (412) d'arbre d'entrée le long de la direction axiale (C).

3. Module de puissance (1, 1a, 1b, 1c) du vélo à assistance électrique selon la revendication 1, dans lequel, lorsque la partie principale (411) d'arbre d'entrée est agencée entre la partie rotor (412) d'arbre d'entrée et la partie excentrique (413) d'arbre d'entrée, un diamètre externe de la partie rotor (412) d'arbre d'entrée est supérieur à un diamètre externe de la partie principale (411) d'arbre d'entrée, et le diamètre externe de la partie principale (411) d'arbre d'entrée est supérieur à un diamètre externe de la partie excentrique (413) d'arbre d'entrée.

4. Module de puissance (1, 1a, 1b, 1c) du vélo à assistance électrique selon la revendication 1, comprenant en outre un premier roulement bidirectionnel (82) de partie principale d'arbre d'entrée et un second roulement bidirectionnel (83) de partie principale d'arbre d'entrée agencés le long de la direction axiale (C), et emmanchés autour de la partie principale d'arbre d'entrée (411) et disposés adjacents au troisième côté (S3) de la partie cloison (24), respectivement, dans lequel le second roulement bidirectionnel (83) de partie principale d'arbre d'entrée est relié à la partie rotor (412) d'arbre d'entrée le long de la direction axiale (C).

5. Module de puissance du vélo à assistance électrique selon la revendication 1, comprenant en outre un premier roulement bidirectionnel (89) d'arbre de sortie de réducteur et un premier roulement bidirectionnel (82) de partie excentrique d'arbre d'entrée, dans lequel le premier roulement bidirectionnel (89) d'arbre de sortie de réducteur est emmanché autour de l'arbre de sortie (44) de réducteur et disposé adjacent au boîtier (20), et le premier roulement bidirectionnel (82) de partie excentrique d'arbre d'entrée est emmanché autour de la partie excentrique (413) d'arbre d'entrée et disposé adjacent à l'engrenage mobile (42).

6. Module de puissance (1, 1a, 1b, 1c) du vélo à assistance électrique selon la revendication 1, comprenant en outre un premier roulement bidirectionnel (85) d'arbre de sortie de plaque d'engrenage et un second roulement bidirectionnel (86) d'arbre de sortie de plaque d'engrenage configurés pour limiter le mouvement de l'arbre de sortie (50) de plaque d'engrenage le long de la direction axiale (C), dans lequel le premier roulement bidirectionnel (85) d'arbre de sortie de plaque d'engrenage est emmanché autour de l'arbre de sortie (50) de plaque d'engrenage et disposé adjacent au boîtier (20) dans la direction radiale, et disposé adjacent au premier roulement unidirectionnel (87) d'arbre de sortie de plaque d'engrenage le long de la direction axiale (C), dans lequel le second roulement unidirectionnel (86) d'arbre de sortie de plaque d'engrenage est emmanché autour de l'arbre de sortie (50) de plaque d'engrenage et disposé adjacent à l'arbre de pédale (10), et disposé adjacent au second roulement unidirectionnel (88) d'arbre de sortie de plaque d'engrenage le long de la direction axiale (C).

7. Module de puissance (1, 1a, 1b, 1c) du vélo à assistance électrique selon la revendication 1, comprenant en outre un dispositif d'entraînement (70) disposé dans le boîtier (20), agencé entre le moteur (30) et un capuchon (21) du boîtier (20), et électriquement connecté à un composant codeur et au composant de détection (60).

8. Module de puissance (1, 1a, 1b, 1c) du vélo à assistance électrique selon la revendication 1, dans lequel l'arbre d'entrée (41) de réducteur comprend en outre une partie d'extension (414) s'étendant vers un capuchon (21) du boîtier (20) le long de la direction axiale (C), et reliée au capuchon (21) par l'intermédiaire d'un roulement arrière (33) d'arbre d'entrée.

9. Module de puissance (1c) du vélo à assistance électrique selon la revendication 8, comprenant en outre un composant de codage présentant une partie rotative (61) et une partie de détection (62) agencée dans la direction radiale, dans lequel la partie rotative (61) est disposée sur la partie d'extension (414) de l'arbre d'entrée (41) de réducteur.

10. Module de puissance (1b) du vélo à assistance électrique selon la revendication 1, comprenant en outre un composant codeur présentant une partie de détection (62a) disposée adjacente à un aimant moteur-rotor (32) du moteur (30).
